# EUROPEAN PATENT SPECIFICATION

(11) **EP 3 044 086 B1**
(45) Date of publication and mention of the grant of the patent: **06.09.2017**
(21) Application number: 14777847.6
(22) Date of filing: 03.09.2014
(51) Int. Cl.: B63B 39/06

(54) **LUBRICATION SYSTEM FOR BEARINGS OF MECHANICAL MEMBERS FOR MOVING THE STABILIZING FIN OF A VESSEL**
SCHMIERSYSTEM FÜR LAGER VON MECHANISCHEN TEILEN ZUM BEWEGEN DER STABILISIERUNGSFINNE EINES SCHIFFES
SYSTÈME DE LUBRIFICATION POUR PALIERS D'ORGANES MÉCANIQUES POUR LE DÉPLACEMENT DE STABILISATEUR ANTIROULIS D'UN NAVIRE

(30) Priority: 13.09.2013 IT MI20131517
(43) Date of publication of application: 20.07.2016
(73) Proprietor: Fincantieri S.p.A., 34121 Trieste (IT)
(72) Inventor: CALCAGNO, Alessandro, I-34121 Trieste (IT); MUZIO, Andrea, I-34121 Trieste (IT); DEDICATO, Enrico, I-34121 Trieste (IT); BARLETTO, Giorgio, I-34121 Trieste (IT); CASAGRANDE, Giuseppe, I-34121 Trieste (IT); CAVALIERE, Rocco, I-34121 Trieste (IT); CELLA, Gianpiero, I-34121 Trieste (IT)
(74) Representative: Crippa, Paolo Ernesto
(86) International application number: PCT/IB2014/064226
(87) International publication number: WO 2015/036899

(56) References cited:
- DE-A1-102011 078 840
- FR-A1- 2 429 146
- JP-A- H09 323 697
- JP-A- 2000 043 785

## Description

### Technical field

The present invention relates to a lubricating system for bearing units of mechanical members of an apparatus for moving the stabilizing fin of a vessel, as set forth in the preamble of claim 1.

### Background art

Anti-roll stabilizing devices are know, for a boat or vessel, which are based on the hydrodynamic action of fins or centerboards.

In order to limit the drag that such stabilizing devices pose to the advancement movement of the vessel, mechanisms are arranged to refract the fins inside the hull by causing them to rotate about a first axis. Furthermore, in order to generate the hydrodynamic thrust for balancing undesired oscillations, it is possible to provide the fins with a second degree or freedom, this allowing adjusting the hydrodynamic angle of attach of the fin about a second axis that is transversal to the first one.

To rotatably support the mechanical members designed to move the fin, support elements are used, such as bearing units, bushings, bushes, etc. With the aim of optimizing the tribological conditions under which the bearing units operate, it is necessary to arrange a suitable lubrication system.

To date, oil lubrication is the most widely adapted solution for lubricating the components or mechanical members for moving the stabilizing fins of a vessel. Patent publication GB 2 025 874 A discloses a casing containing the moving members of a stabilizing fin of a vessel. The inside of the casing is filled with oil at a pressure slightly above the water pressure, due to the immersion of the vessel. Such arragement allows the lubrication of the bearing units supporting the fin shaft and other rolling parts. The oil overpressure prevents water infiltrations and protects the fin moving members, but, in the case or damage to one of the sealing devices, it leads to an oil leak to the sea, resulting in pollution. DE 10 2011 078840 A1 discloses a rolling bearing, lubricated with grease, for rotatably supporting a stabilizing fin of a vessel.

Oil lubrication requires expensive constructive arrangements, due to the need to ensure a perfect water-proof seat of the bearing units and to assess the presence or the lubricant. Therefore, grease lubrication is preferred. The advantages of grease compared to oil are a better adhesion to the moving members, an increased sealing ability, a higher protection against corrosion, and the absence of return and recirculation circuits.

The most efficient solution to exploit the advantages of this kind of lubrication is to supply the grease directly to the mechanical members to be lubricated. Patent publication GB 1 196 553 A provides the example of a grease lubrication circuit of bearing units, by channels formed directly in the outer casing. A lubrication system according to GB 1 196 553 A represents a rigid solution, constructively complex, and not applicable where it is desired to convert a pre-existing oil bath-lubricated device into a device adapted for grease lubrication.

### Summary of the invention

A general object of the present invention is to provide a lubrication system that is optimized for the functional conditions under which the mechanical members for moving the stabilizing fins of vessels operate, ensuring cost-effectiveness and manufacturing flexibility.

Such an object is achieved, according to the invention, by a lubrication system having the features defined in the appended claims. In brief, the invention provides for the replacement of the oil lubrication with grease lubrication by applying supply pipes in the inner volume enclosed by the casing, both in the case of a newly manufactured fin moving device, and in the case of refitting pre-existing devices.

A minimum number of bores having a reduced length may be formed in the casing. These bores may conveniently have inclinations orthogonal or parallel to the symmetry axes of the several parts of the casing, and therefore can be easily obtained. The bores may be suitably connected by tubular conduits which can be adapted to the inner profile of the casing. As a result, an efficient lubrication of the mechanical members for moving a stabilizing fin is achieved, also with preexisting devices for which it is desired to modify the lubrication system.

The above-mentioned and other objects and advantages are accomplished, according to an aspect of the invention, by a lubrication system having the features defined in claim 1. Preferred embodiments of the invention are set forth in the dependent claims.

### Brief description of the drawings

A few preferred, non-limiting embodiments of the invention will be now described, with reference to the appended drawings, in which:
- Fig. 1 is a schematic view in vertical cross section of an apparatus for moving a stabilizing fin of a vessel, according to an embodiment of the invention;
- Fig. 2 is a schematic view of a detail of the apparatus of Fig. 1;
- Fig. 3 is a schematic view in horizontal partial cross section of the apparatus of Fig. 1;
- Fig. 4 is a schematic view in horizontal cross section of the apparatus of Fig. 1;
- Fig. 5 is a schematic view of a detail of the apparatus of Fig. 4;
- Fig. 6 is a schematic view of a further detail of the apparatus of Fig. 4;
- Fig. 7 is a schematic view in vertical cross section of the detail of the apparatus of Fig. 6.

### Detailed description

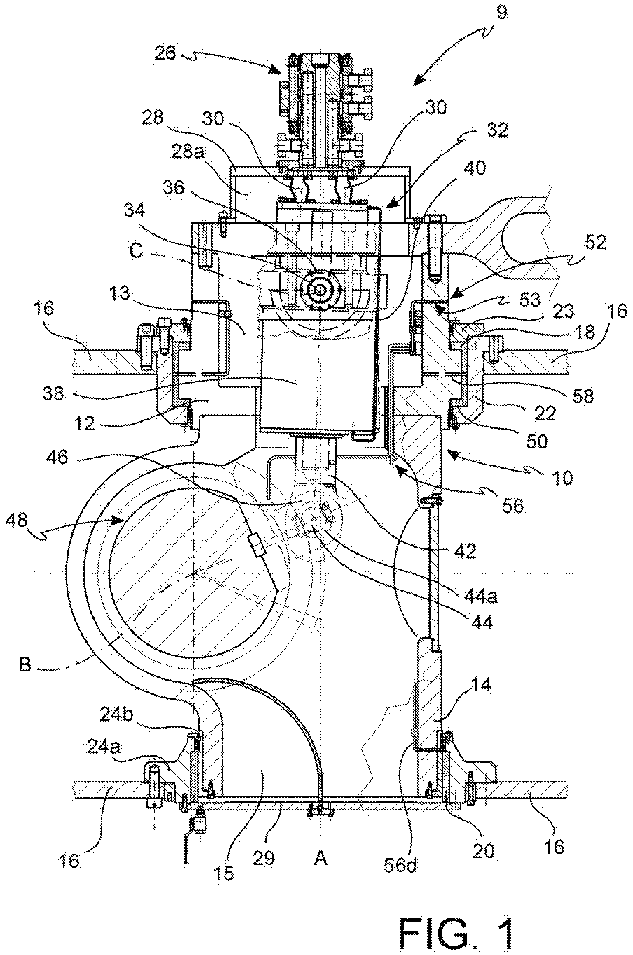

Referring initially to Fig. 1, an apparatus 9 for moving a stabilizing fin P for a vessel comprises an outer casing 10, rotatable about an axis A, vertical in Fig. 1, by means of bearing units 18, 20. Rotation of the apparatus 9 about the axis A allows withdrawing and retracting the stabilizing fin with respect to the hull (not shown) of a boat or vessel.

Conventionally, bearing units 18, 20 are oil-lubricated bearing units. According to an embodiment, the oil-lubricated bearing units 18, 20 may be replaced by self-lubricating bushings, so that a dedicated lubrication circuit is not needed. Preferably, the self-lubricating bushings are formed with inserts in graphite or polytetrafluoroethylene (PTFE or "Teflon").

The upper bearing unit 18 is housed in the interspace formed between an upper portion or shell 12 of the casing 10 and two shaped annular plates 22, 23, integral with a fixed structure 16 of the vessel.

Similarly, the lower bearing unit 20 is housed between shaped flanged rings 24a, 24b, made integral to a lower portion or shell 14 of the casing 10 and to the fixed structure 16 of the vessel, respectively.

In an embodiment of the apparatus 9, the casing 10 is closed superiorly by a lid 28 and inferiorly by a base plate 29. The upper shell 12 and the lower shell 14 define two inner cavities or chambers 13, 15, respectively.

According to conventional designs, the components of the apparatus placed inside of the two inner chambers 13, 15 are lubricated by an oil bath. Conversely, the present system replaces the oil bath lubrication with a grease lubrication. Grease is supplied directly onto the parts to be lubricated by a lubricant distribution circuit 50, which is described in more detail in the following paragraphs. Particularly, the distribution circuit 50 allows separately and periodically lubricating each bearing unit as the components of the apparatus move relative to one another. Such bearing units comprise the afore mentioned bearings or bushings 18, 20 and, as specified in the following of the description, two bearing units 64, 66, preferably in the form of rolling contact bearings.

In an embodiment, the traditional oil bath cylinder is replaced by a cylinder 32, pivotable about an axis C by self-lubricating bushings 36 integral with the casing 12, and a pin 34, integral with the cylinder 32. The axis C, perpendicular to the axis A, is generally inclined by about 15°.

The cylinder 32 is supplied through two bores formed in the pins 34 and connected to the distributor 26 through rigid pipes (not shown). The distributor 26 is integral with the lid 28. The cylinder 32 has a shell 38, provided with a leak recovery system (not shown) for reintroducing leakages through a conduit 40 and bellows 30 into a compensation circuit (not shown in the drawing), and hence into the supplying circuit.

The cylinder 32 allows reciprocating motion, along a direction perpendicular to the axis C, of an actuator 42, which, at a distal or lower end, has a preferably spherical joint 44.

In the present description, unless otherwise specified, spatial definitions such as lower, upper, distal, transversal, etc., are referred to the axis C.

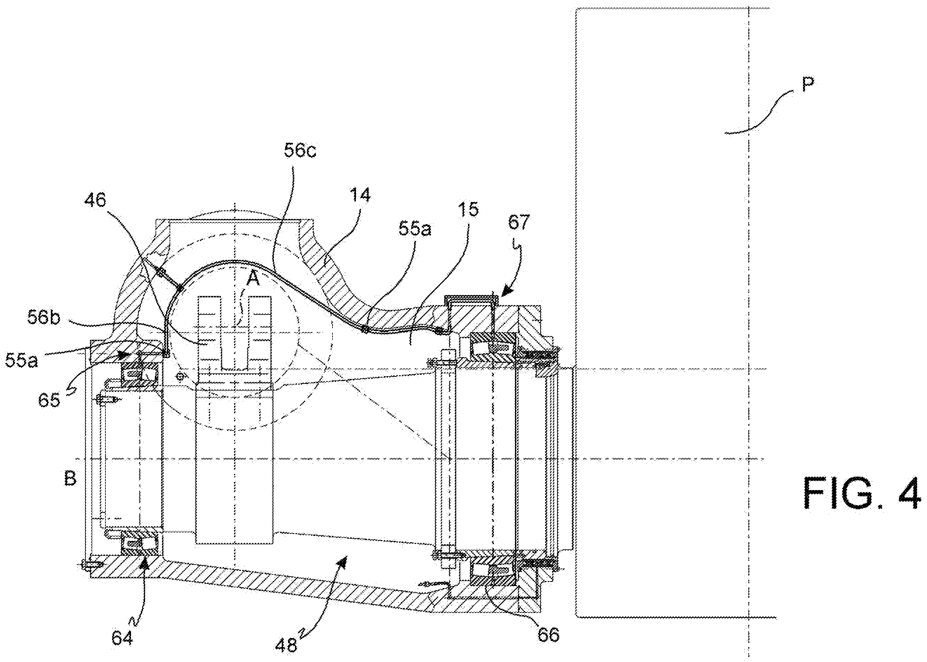

The spherical joint 44 engages, by self-lubricating bushings 44a, a rigid element 46, preferably in the form of a fork, integral with an oscillating shaft 48 of the stabilizing fin P, visible in Fig. 4.

The alternate motion of the actuator 42, through the oscillatory motion of the fork 46, imparts an oscillation movement about an axis B, parallel to the axis C to the shaft 48. The shaft B, by oscillating, adjusts the inclination of the stabilizing fin P outside the hull, so as to modulate the hydrodynamic stabilizing reaction.

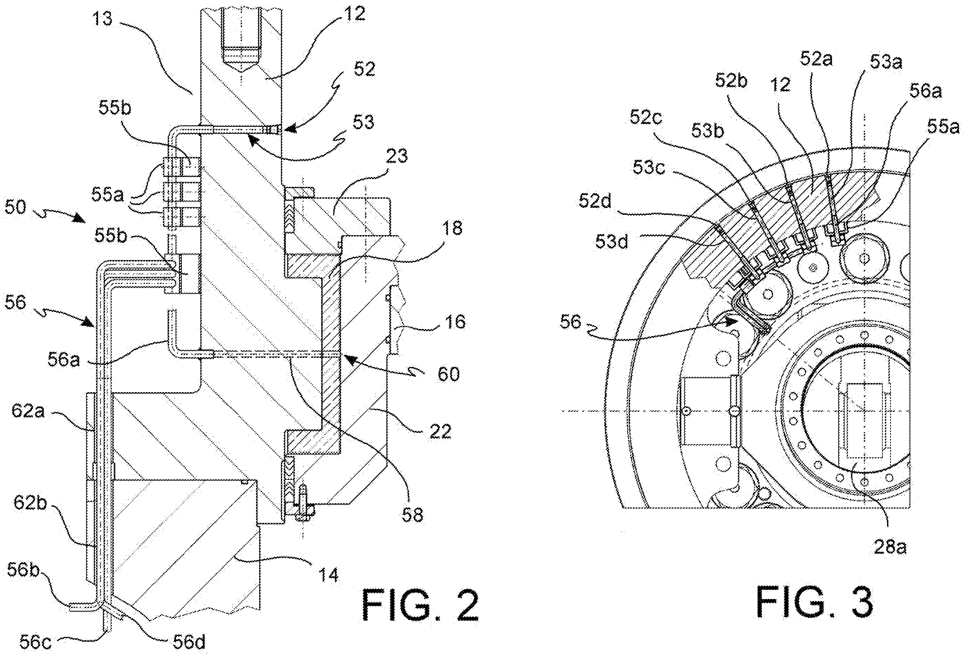

With reference to the Figs. 2 and 3, a part of the circuit system 50 supplying the lubricant grease to the bearing units of the mechanical members of the apparatus 9 is shown.

One or more external sources (not shown) of pressurized lubricant grease supply a plurality of lubricant inlets 52. The inlets 52 are in fluid communication, through a plurality of through bores 53, with a respective plurality of tubular conduits or supply pipes 56. Each tubular conduit 56 conveys the lubricant to at least one bearing unit of the movable components of the apparatus 9. In the particular embodiment illustrated, each of the tubular conduits 56 conveys the lubricant to a single bearing unit of the mechanical members or components of the apparatus 9.

Fig. 3 is a top view, in partial cross section, of the apparatus 9. The sectioned part discloses that the through bores 53, in a preferred embodiment, are formed radially in the upper shell 12, and are mutually angularly spaced apart. Furthermore, in Fig. 3, as compared to Fig. 1, the distributor 26 and the lid 28 have been omitted, for the sake of showing the inside of the apparatus 9 through an opening 28a in the top part of the upper shell 12.

In an embodiment, where the bearing units 18, 20 are not self-lubricating (for example, in the case of a complete or partial refitting of an already existing apparatus, devised according to the prior art), four inlets 52a, 52b, 52c, 52d are required, in fluid communication with corresponding supply pipes 56a, 56b, 56c, 56d, through four through bores 53a, 53b, 53c, 53d.

The supply pipes 56a, 56b, 56c, 56d may be flexible tubes, and may be secured to the inner walls of the casing 10 by spacers 55b and clamps 55a. In this manner, the path traced by the supply pipes may follow the inner profile of the casing walls, easily reaching any zone of the apparatus without the need to create a too complex bore pattern.

In the embodiment illustrated in Fig. 2, the tubes 56a, 56d act to lubricate the upper bearing unit 18 and the lower bearing unit 20, respectively. In particular, the conduit 56a is in fluid communication, by a through bore 58 in the wall of the casing 12, with a radial orifice 60, passing through the body of the bearing unit 18. In this manner, it is possible to periodically grease the bearing unit, ensuring a suitable lubrication.

In the upper 12 and lower 14 casings, two through and coaxial vertical bores 62a, 62b are respectively formed, determining a channel for housing and allowing the passage of the supply pipes 56b, 56c, 56d from the upper shell to the lower bearing units to be lubricated.

In an embodiment, the apparatus 9 is provided with self-lubricating bushings; therefore, it is not necessary to provide the inlets 52a, 52d, the through bores 53a, 53d and the supply pipes 56a, 56d.

In a preferred embodiment, the supply pipes 56b, 56c are suitably curved, so as to trace a path within the cavity 15 which does not cross the mechanical members of the apparatus 9 for moving the fin (for example, the pivotable cylinder 32, the actuator 42 stem, the fork 46, and the shaft 48).

Fig. 4 shows a horizontal sectional view of the lower shell 14, illustrating the oscillating shaft 48 of the stabilizing fin P, the bearing units 64, 66, and the respective lubrication circuit.

As mentioned above, the shaft 48 is pivotable about the axis B by means of the coupling between the reciprocating motion of the actuator 42 and the oscillatory motion of the fork 46, integral with the shaft 48.

With respect to the rotation axis A (vertical in the appended drawing) of the casing 10, a proximal bearing unit 64 and a distal bearing unit 66 allow to rotatably support the shaft 48 about the axis B. The bearing units 64, 66 rotatably support the shaft 48 with respect to the lower shell 14.

Conveniently, the two bearing units are rolling contact bearings, but the use of elements of a different type can be provided. In a preferred embodiment, illustrated in Figs. 4, 5 and 6, the bearing units 64, 66 are shielded bearing units.

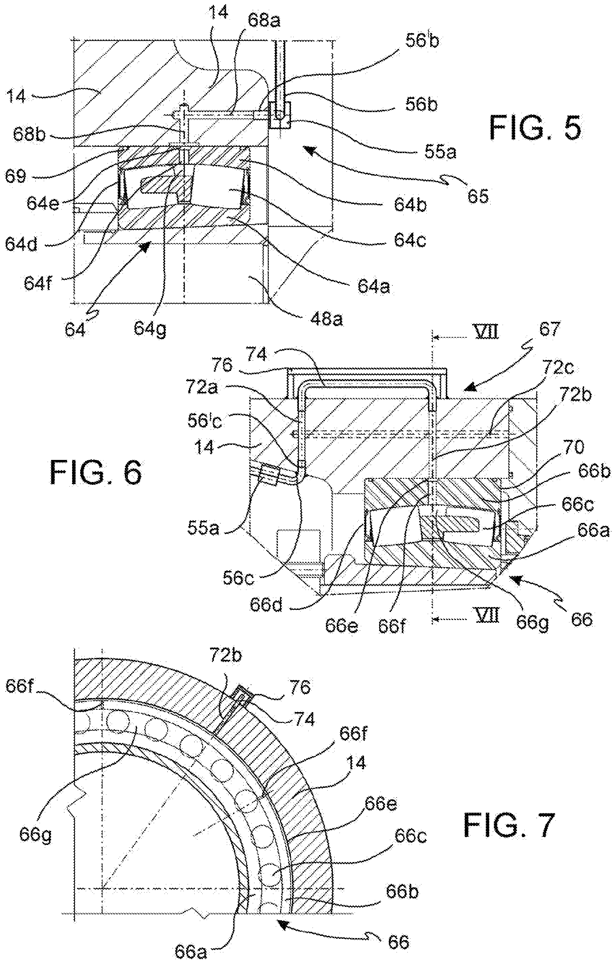

The supply conduit 56b, guided by the clamps 55a, opens into the bearing unit 64, which is grease lubricated through passages 65, illustrated in the detail in Fig. 5. Similarly, the supply conduit 56c, guided by the clamps 55a, opens into the bearing unit 66, which is lubricated by passages 67, illustrated in detail in Fig. 6.

Fig. 5 shows a detail of Fig. 4, relative to the shape of the bearing unit 64 and the lubrication passages 65.

The bearing unit 64 has an inner annular volume 64g defined by an inner ring 64a, by outer rings 64b and laterally by sealing shields 64d. The annular volume 64g forms a seat for rollers 64c, in this example spherical rollers, and is in fluid communication with the lubrication passages 65 through an annular groove 64e and a plurality of radial through orifices 64f, each formed in the outer rings 64b of the bearing unit. In a preferred embodiment, the annular groove 64e is equally formed in the outer rings of the bearing unit For example, the annular groove may be formed in the thickness of the casing, at the interface between the casing and the bearing unit.

In an embodiment, the bearing unit inner volume 64g is in fluid communication with the grease supply conduit 56b, through mutually orthogonal passage bores 68a, 68b. The passage bores are formed in the lower shell 14 thickness. One end 56'b of the conduit 56b engages in the passage bore 68a, so that the grease may flow, through the passage bore 68b (aligned with the axial centerline of the bearing unit), up to the annular groove 64e and, therefrom, flow into the inner volume 64g by means of the through orifices 64e. These orifices are aligned with the axial centerline of the bearing unit and angularly distributed in the outer rings 64b of the bearing unit (similarly to what has been illustrated in Fig. 7, with reference to the bearing unit represented in Fig. 6). Finally, gaskets 69, suitably of the "O-ring" type, concur in preventing the oxidation of the bearing unit outer track.

Fig. 6 schematically illustrates the lubrication system relating to the second bearing unit 66. In a suitable embodiment, the distal bearing unit 66 is of the same type of the proximal bearing unit 64.

The bearing unit 66 has an inner annular volume 66g inferiorly defined by an inner ring 66a, superiorly by outer rings 66b and laterally by sealing shields 66d. The inner volume 66g forms a seat for spherical rollers 66c, and is in fluid communication with the lubrication passages 67 by an annular groove 66e and a plurality of radial through orifices 66f, each being formed in the outer rings 66b of the bearing unit. In a preferred embodiment, the annular groove 66e is formed in the bearing unit outer rings. Lubrication of the rollers 66c is obtained by establishing fluid communication between the inner volume 66f of the bearing unit and the supply conduit 56c.

In an embodiment, particularly suitable to refitting already existing devices, the supply conduit 56c engages, by an end 56'c, in a first through bore 72a, formed in the thickness of the casing 14. A tubular element 74 external to the casing 14 and preferably being C-shaped, puts the first through bore 72a in fluid communication with a second through bore 72b, formed in the thickness of the casing 14 and aligned with the bearing unit 66 axial centerline. Suitably, a box-shaped body 76, integral to the casing, protects the tubular connecting element 74.

Due to the so formed connection between the supply conduit 56c and the second through bore 72b, the lubricant can reach the annular groove 66e and, therefrom, flow into the inner volume 66g by means of the through orifices 66e, which are aligned with the bearing unit axial centerline and angularly distributed in the outer rings 66b of the bearing unit, as it can be seen in Fig. 7.

Furthermore, gaskets 70, suitably of the "O-ring" type, concur in preventing oxidation of the outer ring of the bearing unit.

Fig. 7 illustrates a sectional view of the bearing unit 66, schematically illustrating part of the circumferential extension of the casing 14, the annular groove 66e, and the bearing unit 66, including some through radial orifices 66f.

According to a further embodiment, particularly suitable in the case of a partially or entirely novel construction of the apparatus, the connection between the through bores 72a, 72b does not occur externally to the casing, for example by the tubular element 74 and the sleeve 76. Conversely, the connection between the bores is made internally by forming a connecting blind hole 72c in the thickness of the casing, which blind bore crosses both bores 72a, 72b.

All the other elements mentioned in the description of the previous embodiment can remain unaltered in their shape and function, or they can be subject to a dimensional adaptation, since the bores 72a, 72b need not necessarily be formed through the entire thickness of the casing.

Several aspects and embodiments of the invention have been described. It shall be understood that each embodiment may be combined with any other embodiment. Furthermore, the invention is not limited to the described embodiments, but it may be able varied within the scope defined by the appended claims.

## Claims

1. A lubrication system for bearing units of mechanical members of an apparatus (9) for moving a stabilizer fin (P) of a vessel, the apparatus comprising:
- a casing (10), rotatable about a first axis (A) with respect to a fixed structure (16) integral to the vessel, said casing (10) comprising an upper shell (12) and a lower shell (14) defining inner cavities or chambers (13, 15);
- first (18) and second (20) bearing units rotatably supporting the casing (10) about the first axis (A) with respect to the fixed structure (16);
- an oscillating shaft (48) of the stabilizing fin (P), the oscillating shaft being rotatably mounted within the casing (10) about a second axis (B) which is perpendicular to the first axis (A) or substantially horizontal;
- a third bearing unit (64) and a fourth bearing unit (66) rotatably supporting the oscillating shaft (48) with respect to the casing (10);
- a cylinder actuator (32, 42) having a first end providing a joint (44) for connection with a rigid element (46) integral with the oscillating shaft (48), and
- a lubrication circuit (50) for distributing lubricant to the bearing units (18, 20, 64, 66); wherein the lubrication circuit (50) comprises a plurality of tubes (56) extending inside the cavities (13, 15) of the casing (10), **characterised in that** said tubes being in fluid communication with a plurality of inlets (52) for supplying lubricant grease through a plurality of radial through bores (53, 58) formed through the upper casing (12) and a plurality of passage bores (68a, 68b, 72a, 72b, 72c) formed in the lower shell (14), so as to separately and periodically lubricate the surfaces of the bearing units (18, 20, 64, 66) subjected to rolling or sliding.

2. A lubrication system according to claim 1, wherein the first (18) and the second (20) bearing unit are self-lubricating bushings.

3. A lubrication system according to claim 1, wherein the third (64) and fourth (66) bearing units are shielded rolling contact bearings.

4. A lubrication system according to claim 3, wherein the third and fourth bearing units (64, 66) each have an inner annular volume (64g, 66g) containing rolling elements (64c, 66c), said inner annular volume being in fluid communication with a respective lubricating grease supply pipe (56b, 56c), through the passage bores (68a, 68b, 72a, 72b, 72c) formed in the thickness of the casing (10), said bores providing a connection between the supply pipe (56b, 56c) and an annular groove (64e, 66e) arranged on an axial centerline of the third and fourth bearing units (64, 66).

5. A lubrication system according to claim 4, wherein the inner annular volume (64g, 66g) of the third and fourth bearing units (64, 66) is in fluid communication with the respective annular groove (64e, 66e) by means of radial bores (64f, 66f) passing through the thickness of outer rings (64b, 66b) of the third and fourth bearing units.

6. A lubrication system according to claim 4, wherein the lubricating passage bores (72a, 72b) of the fourth bearing unit (66) are mutually placed in fluid communication either through a tubular connecting element (74) arranged outside the casing (10), or through a passage bore (72c) formed within the thickness of the casing.

7. A lubrication system according to claim 1, wherein the cylinder (32) is pivotable about a third axis (C), perpendicular to the first axis (A), by means of a pin (34) and self-lubricating bushings (36), said cylinder (32) providing a conduit (40) for the recovery of internal leakages.

8. A lubrication system according to claim 1, wherein the joint (44) between the actuator (42) and the rigid element (46) is supported by self-lubricating bushings (44a).

9. A lubrication system according to claim 1 or 8, wherein the actuator (42) is operatively connected to a distributor (26) and bellows (30).

10. A boat or vessel comprising a lubrication system according to any one of the preceding claims.

## Patentansprüche

1. Schmiersystem für Lagerungseinheiten mechanischer Elemente einer Vorrichtung (9) zur Bewegung einer Stabilisierungsflosse (P) eines Seefahrzeugs, wobei die Vorrichtung umfasst:
- ein Gehäuse (10), welches um eine erste Achse (A) in Bezug auf eine feste Struktur (16), welche integral mit dem Seefahrzeug ist, rotierbar ist, wobei das Gehäuse (10) eine obere Schale (12) und eine untere Schale (14) umfasst, welche innere Räume oder Kammern (13, 15) definieren;
- erste (18) und zweite (20) Lagerungseinheiten, welche das Gehäuse (10) um die erste Achse (A) in Bezug auf die feste Struktur (16) rotierbar haltern;
- einen Schwenkschaft (48) der Stabilisierungsflosse (P), wobei der Schwenkschaft innerhalb des Gehäuses (10) um eine zweite Achse (B), welche rechtwinklig zu der ersten Achse (A) oder im Wesentlichen horizontal ist, rotierbar angebracht ist;
- eine dritte Lagerungseinheit (64) und eine vierte Lagerungseinheit (66), welche den Schwenkschaft (48) in Bezug auf das Gehäuse (10) rotierbar haltern;
- einen Zylinderaktuator (32, 42), welcher ein erstes Ende aufweist, welches ein Gelenk (44) zur Verbindung mit einem starren Element (46), welches mit dem Schwenkschaft (48) integral ist, bereitstellt, und
- einen Schmierkreislauf (50) zur Verteilung von Schmiermittel an die Lagerungseinheiten (18, 20, 64, 66);
wobei der Schmierkreislauf (50) eine Mehrzahl von Leitungen (56) umfasst, welche sich in die Räume (13, 15) des Gehäuses (10) erstrecken, **dadurch gekennzeichnet, dass** die Leitungen mit einer Mehrzahl von Einlässen (52) zur Bereitstellung von Schmierfett durch eine Mehrzahl von radialen Durchgangsbohrungen (53, 58), welche durch das obere Gehäuse (12) gebildet sind, und einer Mehrzahl von Durchtrittsbohrungen (68a, 68b, 72a, 72b, 72c), welche in der unteren Schale (14) gebildet sind, in Fluidkommunikation sind, um die Flächen der Lagerungseinheiten (18, 20, 64, 66), welche einem Rollen oder Gleiten ausgesetzt sind, separat und periodisch zu schmieren.

2. Schmiersystem nach Anspruch 1, wobei die erste (18) und die zweite (20) Lagerungseinheit selbstschmierende Buchsen sind.

3. Schmiersystem nach Anspruch 1, wobei die dritte (64) und vierte (66) Lagerungseinheit geschützte Wälzlager sind.

4. Schmiersystem nach Anspruch 3, wobei die dritte und vierte Lagerungseinheit (64, 66) jeweils ein inneres ringförmiges Volumen (64g, 66g) aufweisen, welches Rollelemente (64c, 66c) umfasst, wobei das innere ringförmigen Volumen mit einer entsprechenden Schmierfett-Versorgungsleitung (56b, 56c) durch die Durchtrittsbohrungen (68a, 68b, 72a, 72b, 72c), welche in der Dicke des Gehäuses (10) gebildet sind, in Fluidkommunikation ist, wobei die Bohrungen eine Verbindung zwischen der Versorgungsleitung (56b, 56c) und einer ringförmigen Rille (64e, 66e), welche an einer axialen Mittellinie der dritten und vierten Lagerungseinheit (64, 66) angeordnet ist, bereitstellen.

5. Schmiersystem nach Anspruch 4, wobei das innere ringförmigen Volumen (64g, 66g) der dritten und vierten Lagerungseinheit (64, 66) mit der entsprechenden ringförmigen Rille (64e, 66e) mittels radialer Bohrungen (64f, 66f), welche durch die Dicke von äußeren Ringen (64b, 66b) der dritten und vierten Lagerungseinheit durchtreten, in Fluidkommunikation ist.

6. Schmiersystem nach Anspruch 4, wobei die Schmierdurchtrittsbohrungen (72a, 72b) der vierten Lagerungseinheit (66) gegenseitig entweder durch ein röhrenförmiges Verbindungselement (74), welches außerhalb des Gehäuses (10) angeordnet ist, oder durch eine Durchtrittsbohrung (72c), welche in der Dicke des Gehäuses gebildet ist, in Fluidkommunikation gesetzt sind.

7. Schmiersystem nach Anspruch 1, wobei der Zylinder (32) um eine dritte Achse (C), welche zu der ersten Achse (A) rechtwinklig ist, mittels eines Stifts (34) und selbstschmierender Buchsen (36) schwenkbar ist, wobei der Zylinder (32) eine Leitung (40) für die Rückgewinnung von internen Leckagen bereitstellt.

8. Schmiersystem nach Anspruch 1, wobei das Gelenk (44) zwischen dem Aktuator (42) und dem starren Element (46) durch selbstschmierende Buchsen (44a) gehaltert ist.

9. Schmiersystem nach Anspruch 1 oder 8, wobei der Aktuator (42) mit einer Verteilungsvorrichtung (26) und Bälgen (30) betriebsmäßig verbunden ist.

10. Boot oder Seefahrzeug umfassend ein Schmiersystem nach einem der vorhergehenden Ansprüche.

## Revendications

1. Système de lubrification pour des unités de palier d'éléments mécaniques d'un appareil (9) pour déplacer une dérive de stabilisateur (P) d'un navire, l'appareil comprenant :
- un boîtier (10) pouvant tourner autour d'un premier axe (A) par rapport à une structure fixe (16) formée intégralement sur le navire, ledit boîtier (10) comprenant une coque supérieure (12) et une coque inférieure (14) définissant des cavités intérieures ou chambres (13, 15) ;
- des première (18) et deuxième (20) unités de palier supportant de manière à pouvoir tourner le boîtier (10) autour du premier axe (A) par rapport à la structure fixe (16) ;
- un arbre oscillant (48) de la dérive de stabilisateur (P), l'arbre oscillant étant monté de manière à pouvoir tourner dans le boîtier (10) autour d'un second axe (B) qui est perpendiculaire au premier axe (A) ou sensiblement horizontal ;
- une troisième unité de palier (64) et une quatrième unité de palier (66) supportant de manière rotative l'arbre oscillant (48) par rapport au boîtier (10) ;
- un actionneur de cylindre (32, 42) présentant une première extrémité fournissant un joint (44) pour la connexion avec un élément rigide (46) formé intégralement dans l'arbre oscillant (48), et
- un circuit de lubrification (50) pour distribuer du lubrifiant aux unités de palier (18, 20, 64, 66) ;
dans lequel le circuit de lubrification (50) comprend une pluralité de tubes (56) s'étendant dans les cavités (13, 15) du boîtier (10), **caractérisé en ce que** lesdits tubes sont en communication fluidique avec une pluralité d'entrées (52) pour fournir de la graisse lubrifiante par une pluralité de trous débouchants radiaux (53, 58) formés à travers le boîtier supérieur (12) et une pluralité de trous de passage (68a, 68b, 72a, 72b, 72c) formés dans la coque inférieure (14) de sorte à lubrifier séparément et périodiquement les surfaces des unités de palier (18, 20, 64, 66) soumises au roulement ou glissement.

2. Système de lubrification selon la revendication 1, dans lequel les première (18) et deuxième (20) unités de palier sont des bagues autolubrifiantes.

3. Système de lubrification selon la revendication 1, dans lequel les troisième (64) et quatrième (66) unités de palier sont des paliers de contact à roulement blindés.

4. Système de lubrification selon la revendication 3, dans lequel les troisième et quatrième unités de palier (64, 66) possèdent chacune un volume annulaire intérieur (64g, 66g) contenant des éléments de roulement (64c, 66c), ledit volume annulaire intérieur étant en communication fluidique avec un tuyau d'alimentation en graisse lubrifiante respectif (56b, 56c) par les trous de passage (68a, 68b, 72a, 72b, 72c) formés dans l'épaisseur du boîtier (10), lesdits trous fournissant une connexion entre le tuyau d'alimentation (56b, 56c) et une rainure annulaire (64e, 66e) agencée sur une ligne centrale axiale des troisième et quatrième unités de palier (64, 66).

5. Système de lubrification selon la revendication 4, dans lequel le volume annulaire intérieur (64g, 66g) des troisième et quatrième unités de palier (64, 66) est en communication fluidique avec la rainure annulaire respective (64e, 66e) à l'aide de trous radiaux (64f, 66f) passant par l'épaisseur d'anneaux extérieurs (64b, 66b) des troisième et quatrième unités de palier.

6. Système de lubrification selon la revendication 4, dans lequel les trous de passage lubrifiant (72a, 72b) de la quatrième unité de palier (66) sont placés mutuellement en communication fluidique par un élément de connexion tubulaire (74) agencé en dehors du boîtier (10) ou par un trou de passage (72c) formé dans l'épaisseur du boîtier.

7. Système de lubrification selon la revendication 1, dans lequel le cylindre (32) est pivotant autour d'un troisième axe (C) perpendiculaire au premier axe (A) à l'aide d'une broche (34) et des bagues autolubrifiantes (36), ledit cylindre (32) fournissant un conduit (40) pour la récupération de fuites internes.

8. Système de lubrification selon la revendication 1, dans lequel le joint (44) entre l'actionneur (42) et l'élément rigide (46) est supporté par des bagues autolubrifiantes (44a).

9. Système de lubrification selon la revendication 1 ou 8, dans lequel l'actionneur (42) est relié en fonctionnement à un distributeur (26) et à des soufflets (30).

10. Bateau ou navire comprenant un système de lubrification selon l'une quelconque des revendications précédentes.
